# EUROPEAN PATENT SPECIFICATION

(11) **EP 2 398 206 B1**
(45) Date of publication and mention of the grant of the patent: **13.02.2013**
(21) Application number: 11004959.0
(22) Date of filing: 17.06.2011
(51) Int. Cl.: H04L 29/06, H04L 12/24

(54) **Method of handling a server delegation and related communication device**
Verfahren zur Handhabung einer Serverdelegierung und zugehörige Kommunikationsvorrichtung
Procédé de gestion de délégation de serveur et appareil de communication associé

(30) Priority: 17.06.2010 US 355647 P
(43) Date of publication of application: 21.12.2011
(73) Proprietor: HTC Corporation, Taoyuan County 330 (TW)
(72) Inventor: Yu, Chun-Ta, Taoyuan City Taoyuan County 330 (TW)
(74) Representative: Ljungberg, Robert

(56) References cited:
- EP-A2- 1 411 430
- WO-A1-2005/121989
- US-A1- 2005 005 112
- OPEN MOBILE ALLIANCE: "OMA Device Management Tree and Description", , 17 June 2008 (2008-06-17), pages 1-48, XP55001776, Retrieved from the Internet: URL:http://www.openmobilealliance.org/Tech nical/release_program/docs/DM/V1_2_1-20080 617-A/OMA-TS-DM_TND-V1_2_1-20080617-A.pdf [retrieved on 2011-06-30]
- OPEN MOBILE ALLIANCE: "OMA Device Management Security", INTERNET CITATION, 26 February 2007 (2007-02-26), pages 1-27, XP002547612, Retrieved from the Internet: URL:http://member.openmobilealliance.org/f tp/public_documents/dm/Permanen t_documents/OMA-TS-DM_Security-V1_2-200702 09-A.zip [retrieved on 2009-09-25]
- OPEN MOBILE TERMINAL PLATFORM: "Advanced Device Management", , 23 January 2008 (2008-01-23), pages 1-31, XP55011409, Retrieved from the Internet: URL:http://www.omtp.org/OMTP_Advanced_Devi ce_Management_v1_0.pdf [retrieved on 2011-11-07]

## Description

### Background of the Invention

### 1. Field of the Invention

The present invention relates to a method used in a service system and related communication device, and more particularly, to a method of handling a service delegation in a service system and related communication device.

### 2. Description of the Prior Art

The Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications is also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

In OMA Device Management (DM) requirement, a Management Authority (MA) is defined as an authorized legal entity which can manage one or more DM clients (e.g. mobile devices) by using the OMA DM protocol. Furthermore, according to deployment of a system supporting the OMA, the MA may directly manage the DM client, or the MA may manage the DM client via one or multiple DM servers, i.e. , the DM client is actually managed by the one or the multiple DM servers. In detail, the DM protocol defines a way according to which a packet or a message is exchanged between the MA and the DM client. The DM protocol also defines a way according to which the DM client can feedback a command, a status or a report to the MA. Further, when using the OMA DM protocol, the MA manages the mobile device through a set of management objects in the DM client which may be small as an integer or large as a picture. For example, a management object can be a Software Component Management Object (SCOMO), a Software and Application Control Management Object (SACMO) or a Firmware Update Management Object (FUMO).

On the other hand, due to increasing needs for mobile services, an operator or a service provider may often have to provide the mobile services to a large number of mobile devices at a same time. In this situation, it is hard for both the operator and the service provider to guarantee quality of the mobile services to the mobile devices due to limited human and material resources. Therefore, it is economical to delegate management of the mobile services to several downstream operators or downstream service providers. Accordingly, the large number of the mobile services and also traffics created by the mobile services can be divided into smaller groups which are easier to be managed. However, how to delegate the management of the mobile devices and the mobile services is a problem to be discussed.

Therefore, the OMA defines a sever delegation according to which the MA can delegation a control of management objects of the DM client to another MA. The server delegation process can be a full delegation or a shared delegation. When the MA performs the full delegation, the MA can not manage the management objects of the DM client, after the control of the management objects is delegated to the another MA. For example, the MA manages the SCOMO and the SACMO of the DM client, and performs the full delegation to delegate the SACMO to the another MA. After the server delegation is completed, the SACMO of the DM client can only be managed by the another MA. Oppositely, when the MA performs the shared delegation, the MA can continue to manage the management objects of the DM client, after the control of the management objects is delegated to the another MA. For example, the MA manages the SCOMO and the SACMO of the DM client, and performs the shared delegation to delegate the SACMO to the another MA. After the server delegation is completed, both the MA and the another MA can manage the SACMO of the DM client. On the other hand, the OMA also defines an Access Control List (ACL) , which comprises access right of each management objects of the DM client. Therefore, when the MA intends to perform an access (e.g. modify, add or delete) on a management object of the DM client, the DM client can determine whether the access is allowed according to the ACL. The MA can perform the access on the management object of the DM client only if the DM client determines the access is allowed according to the ACL. However, even though above terms have been mentioned and defined, process of the server delegation has not been detailed and is a topic to be discussed and addressed.

A paten publication WO 2005/121989 A1 discusses useful information in order to understand the invention.

### Summary

It is an object of the present invention to provide a method and related communication device for handling a server delegation. This object can be achieved by the features of the independent claims. Further embodiments are characterized by the dependent claims.

A method of handling a server delegation for a first server in a service system supporting a device management (DM) protocol is disclosed. The method comprises receiving a delegation message with a first signature from a second server via a delegation session, wherein the second server has a control of a plurality of management objects of a client; generating a delegation request message comprising the delegation message and the first signature; and sending the delegation request message with a second signature to the client in the service system, to obtain the control of the part of the plurality of management objects of the client.

A method of handling a server delegation for a first server in a service system supporting a device management (DM) protocol is disclosed. The first server has a control of a plurality of management objects of a client, and the method comprises generating a delegation message comprising delegation information related to delegating a control of part of the plurality of management objects of the client to a second server; and sending the delegation message with a signature to the second server in the service system via a delegation session, to delegate the control of the part of the plurality of management objects of the client to the second server.

A method of handling a server delegation for a client in a service system supporting a device management (DM) protocol is disclosed. The method comprises obtaining a delegation message with a first signature which are generated by a first server from a second server; verifying validity of the first signature by using a first shared secret, wherein the first shared secret is known by the first server and the client; verifying whether a first request time is within a first predefined period; and updating an access right structure for at least one management object of the client if the first signature and the first request time are valid, for the first server to delegate a control of the at least one management object of the client to the second server; wherein the first request time and the access right structure for the at least one management object of the client is comprised in the delegation message.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary service system according to the present disclosure.
Fig. 2 is a schematic diagram of an exemplary communication device according to the present disclosure.
Fig. 3 is a flowchart of an exemplary process according to the present disclosure.
Fig. 4 is a flowchart of an exemplary state diagram of the service system according to the present disclosure.
Fig. 5 is a schematic diagram of the delegation message with the signature according to the present disclosure.
Fig. 6 is a schematic diagram of the delegation request message with the signature according to the present disclosure.

### Detailed Description

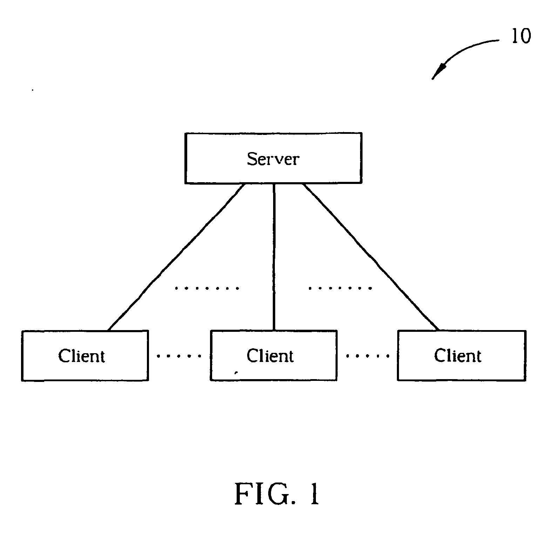

Please refer to Fig. 1, which is a schematic diagram of a service system 10 according to an example of the present disclosure. The service system 10 supports an Open Mobile Alliance (OMA) Device Management (DM) protocol and is briefly composed of a server and a plurality of DM clients (hereafter clients for short). Further, the server manages a client conforming to the OMA DM protocol through management objects of the client. On the hand, the client maintains an Access Control List (ACL) which comprises access rights of the management objects of the client. When the server intends to perform an access (e.g. replace, add or delete) on the management objects of the client, the client can determine whether the access is allowed according to the ACL. The server can perform the access on the management objects of the client only if the client determines the access is allowed according to the ACL.

In Fig. 1, the server and the clients are simply utilized for illustrating the structure of the service system 10. Practically, the server can be referred as a plurality of DM servers or a pluraity of DM servers administrated by a Management Authority (MA), according to deployment of the service system 10. In the previous case, the plurality of DM servers can directly manage the clients, while the MA manages the clients via the plurality of DM servers in the later case. Without loss of generality, the server used hereafter refers to the MA or a DM server which manages the clients. The clients can be desktops and home electronics which are fixed at a certain position. Alternatively, the clients can be mobile devices such as mobile phones, laptops, tablet computers, electronic books, and portable computer systems. The management objects can be bearer agnostic, i.e., the bearer that carries the management objects can be a second generation (2G) mobile system such as Global System for Mobile Communications (GSM), Enhanced Data rates for GSM Evolution (EDGE) or General Packet Radio Service (GPRS), a third generation (3G) mobile system such as Universal Mobile Telecommunications System (UMTS) , Long Term Evolution (LTE) or LTE-Advanced or even a wireline communication system such as an Asymmetric Digital Subscriber Line (ADSL).

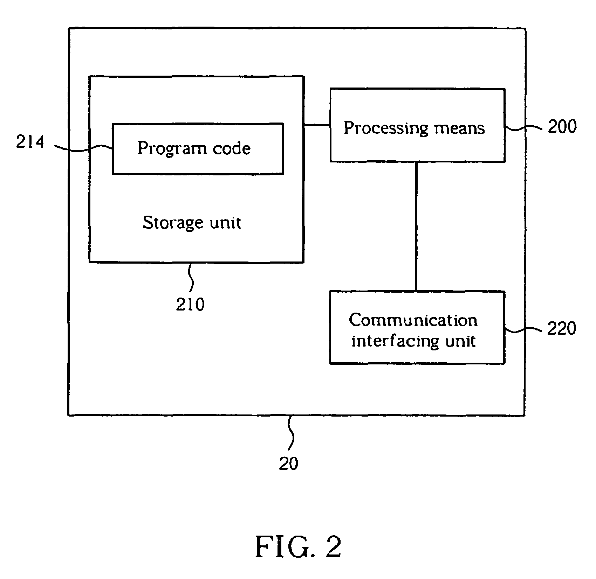

Please refer to Fig. 2, which is a schematic diagram of a communication device 20 according to an example of the present disclosure. The communication device 20 can be the client or the server shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver and can exchange signals with the server according to processing results of the processor 200.

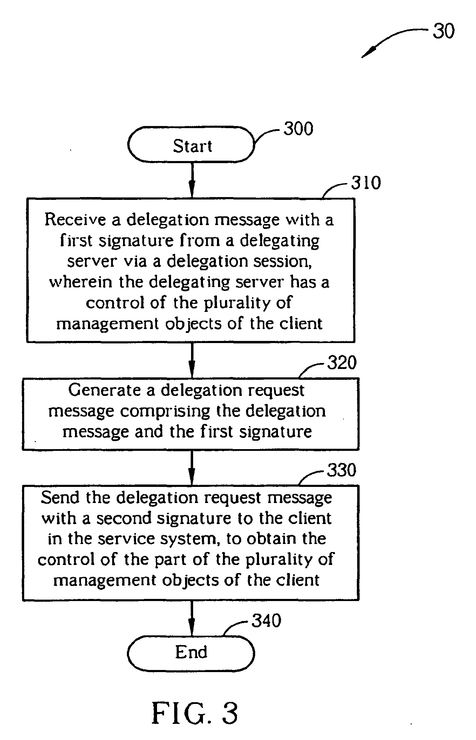

Please refer to Fig. 3, which is a flowchart of a process 30 according to an example of the present disclosure. The process 30 is utilized in a delegated server of the service system 10 shown in Fig. 1, to obtain an control of part of a plurality of management objects of a client. The process 30 may be compiled into the program code 214 and includes the following steps:
- Step 300:: Start.
- Step 310:: Receive a delegation message with a first signature from a delegating server via a delegation session, wherein the delegating server has a control of the plurality of management objects of the client.
- Step 320:: Generate a delegation request message comprising the delegation message and the first signature.
- Step 330:: Send the delegation request message with a second signature to the client in the service system, to obtain the control of the part of the plurality of management objects of the client.
- Step 340:: End.

According to the process 30, when the delegating server has the control of the plurality of management objects of the client, the delegating server can delegate the part of the plurality of management objects of the client to the delegated server according to a request of the delegating server or a request from the delegated server. The delegating server first sends the delegation message with the first signature to the delegated server to notify a change of the control of the part of the plurality of management objects. After the delegated server receives the delegation message and the first signature, the delegated server generates the delegation request message which includes the delegation message and the first signature. Then the delegated server transmits the delegation request message with the second signature to the client to notify the client the change of the part of the control of the plurality of management objects. Therefore, when the delegated server intends to perform the access on the part of the control of the plurality of management objects, the client determines that the access is allowed.

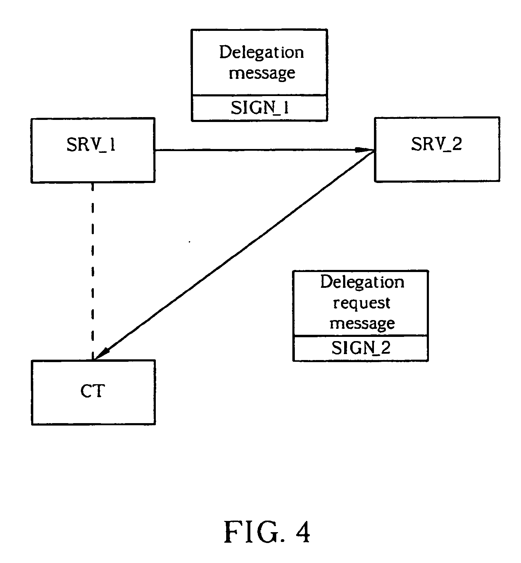

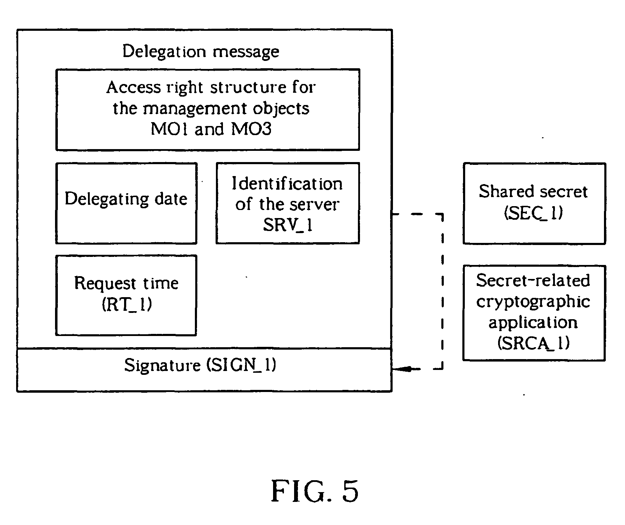

For example, please refer to Fig. 4, which is a flowchart of an exemplary state diagram of the service system 10. The Fig. 4 is used to illustrate the process 30 by using a server delegation among a server SRV_1, a server SRV_2 and a client CT, which are included in the service system 20. The client CT owns several management objects including management objects MO1, MO2 and M03, which may be a Software Component Management Object (SCOMO), a Software and Application Control Management Object (SACMO) and a Firmware Update Management Object (FUMO) , but are not limited herein. The management objects are under a control of the server SRV_1. When the server SRV_1 intends to delegate a control of the management objects MO1 and M03 to the server SRV_2 according to a certain cause, the server SRV_1 initiates a delegation session for the server delegation. Alternatively, the server SRV_2 may also request the server SRV_1 to delegate the control of the management objects MO1 and M03 to the server SRV_2 according to the certain cause, and in this situation, the server SRV_2 initiates the delegation session for the server delegation. In either case, the server SRV_1 generates a delegation message which preferably includes an access right structure for the management objects MO1 and MO3, a delegating date, an identification of the server SRV-_1 and a request time RT_1. Furthermore, the server SRV_1 generates a signature SIGN_1 by using the delegation message, a shared secret SEC_1 and a secret-related cryptographic application SRCA-1, wherein the shared secret SEC_1 is known between the server SRV_1 and the client CT. More specifically, please refer to Fig. 5, which is a schematic diagram of the delegation message with the signature SIGN_{_}1 according to the above illustration. Then, the server SRV_1 transmits the delegation message with the signature SIGN_1 to the server SRV_2 via the delegation session.

Please note that, the certain cause mentioned above may be a load balance between the servers SRV_1 and SRV_2, an offline maintenance of the SRV_1 or a request from the server SRV_2. The access right structure includes information related to access rights of the management objects MO1 and MO3, and is used by the client CT to update an ACL of the management objects. The delegating date is a time at which the server delegation becomes effective. The identification of the server SRV_1 is used to identify the server SRV_1 and is preferably a domain name or an internet protocol (IP) address of the server SRV_1. The request times RT_1 is used for reply-attack protection. Furthermore, the server SRV_1 may not transmit the delegation message with the signature SIGN_1 directly to the server SRV_2 via the delegation session, but transmits a message including the delegation message and the signature SIGN_1 to the server SRV _2 via the delegation session, wherein the message may further include other control information or data.

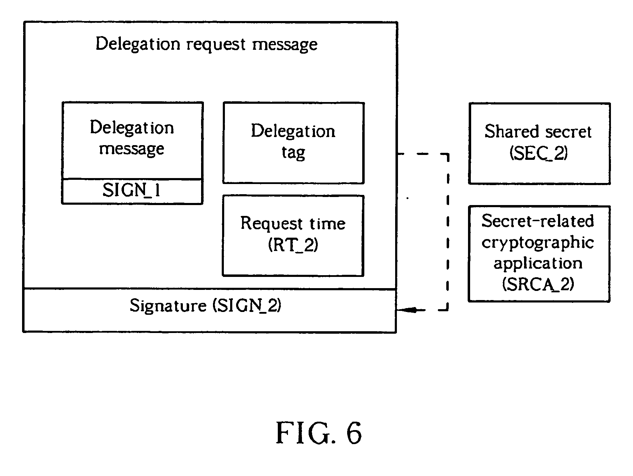

After the server SRV_2 receives the delegation message and the signature SIGN_1 via the delegation session, the server SRV_2 generates a delegation request message which preferably includes the delegation message, the signature SIGN_1, a delegation tag and a request time RT_2. Furthermore, the server SRV_2 generates a signature SIGN_2 by using the delegation request message, a shared secret SEC_2 and a secret-related cryptographic application SRCA_2, wherein the shared secret SEC_2 is known between the server SRV_2 and the client CT. More specifically, please to Fig. 6, which is a schematic diagram of the delegation request message with the signature SIGN_2 according to the above illustration. Then, the server SRV_2 transmits the delegation request message with the signature SIGN_2 to the client.

Please note that, the delegation tag is used to mark a message as the delegation request message. Similar to the request RT_1, the request times RT_2 is also used for the reply-attack protection. Besides, an authentication process can be used for the servers SRV_1 and SRV_2 after the delegation session is established, to ensure a securer communication between the servers SRV_1 and SRV_2.

When the client CT receives the delegation request message and the signature SIGN_2, the client CT verifies the delegation request message by using the secret-related cryptographic application SRCA_2 and the shared secret SEC_2, to check the signature SIGN_2 and checking whether the request time RT_2 is within a predefined period PRD_2. If one of the signature SIGN_2 and the request time RT_2 is verified incorrect, the client CT determines the delegation request message invalid. Then, the client simply drops the delegation request message and the server delegation is suspended. Oppositely, if the signature SIGN_2 and the request time RT_2 are verified correct, the client CT determines the delegation request message valid and continues to verify the delegation message and the signature SIGN_1 included in the delegation request message.

Similarly, the client CT verifies the delegation message by using the secret-related cryptographic application SRCA_1 and the shared secret SEC_1, to check the signature SIGN_1 and checking whether the request time RT_1 is within a predefined period PRD_1. If one of the signature SIGN_1 and the request time RT_1 is verified incorrect, the client CT determines the delegation message invalid. Then, the client simply drops the delegation message and the server delegation is suspended. Oppositely, if the signature SIGN_1 and the request time RT_1 are verified correct, the client CT determines the delegation message valid and updates the ACL according to the access right structure for the management objects MO1and M03 included in the delegation message. As a result, the server SRV_2 can perform an access on the management objects MO1 and M03 when the server delegation becomes effective, i.e., the delegating time is up.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention provides a method for handling a server delegation in a service system. The method provides a way for a delegating server to delegate access rights of a plurality management objects to a delegated server, when the delegating server or the delegated server requires the server delegation. The server delegation can be a full delegation or a shared delegation. Furthermore, the method is secure since secure keys and signatures are used to protect the server delegation. Therefore, the method is practical and can be realized in the service system.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a server delegation for a server in a service system (10) supporting a device management, DM, protocol, the method comprising:
receiving (310) a delegation message with a first signature from a first server via a delegation session, wherein the first server has a control of a plurality of management objects of a client;
generating (320) a delegation request message comprising the delegation message and the first signature; and
sending (330) the delegation request message with a second signature to the client in the service system, to obtain the control of part of the plurality of management objects of the client.

2. The method of claim 1, wherein the delegation session is initiated by the first server.

3. The method of claim 1 further comprising generating the second signature by using the delegation request message, a second shared secret and a second secret-related cryptographic application, wherein the second shared secret is known by the server and the client.

4. The method of claim 1, wherein the delegation request message further comprises a delegation tag and a second request time for replay-attack protection, and the delegation tag marks a message as the delegation request message.

5. The method of claim 1, wherein the first server generates the first signature by using the delegation message, a first shared secret and a first secret-related cryptographic application, wherein the first shared secret is known by the first server and the client.

6. The method of claim 1, wherein the delegation message comprises an access right structure for the part of the plurality of management objects of the client, a delegating date, an identification of the first server and a first request time for replay-attack protection.

7. The method of claim 6, wherein the access right structure for the part of the plurality of management objects of the client comprises information related to access rights of the part of the plurality of management objects of the client.

8. The method of claim 6, wherein the delegating date is a time at which the server delegation becomes effective.

9. The method of claim 6, wherein the identification of the first server is a domain name or an internet protocol, IP, address.

10. The method of claim 1 further comprising authenticating the first server.

11. The method of claim 1, wherein receiving the delegation message with the first signature from the first server via the delegation session further comprises:
receiving the delegation message with the first signature by receiving a message comprising the delegation message and the first signature from the first server via the delegation session.

12. A method of handling a server delegation for a first server in a service system (10) supporting a device management, DM, protocol, the first server having a control of a plurality of management objects of a client, the method comprising:
generating a delegation message comprising delegation information related to delegating a control of part of the plurality of management objects of the client to a second server; and
sending the delegation message with a signature to the second server in the service system via a delegation session, to delegate the control of the part of the plurality of management objects of the client to the second server.

13. The method of claim 12, wherein the delegation session is initiated by the first server or the second server.

14. The method of claim 12 further comprising generating the signature by using the delegation message, a shared secret and a secret-related cryptographic application, wherein the shared secret is known by the first server and the client

15. The method of claim 12, wherein the delegation information comprises an access right structure for the part of the plurality of management objects of the client, a delegating date, an identification of the first server and a request time for replay-attack protection.

16. The method of claim 15, wherein the access right structure for the part of the plurality of management objects of the client comprises information related to access rights of the part of the plurality of management objects of the client.

17. The method of claim 15, wherein the delegating date is a time at which the server delegation becomes effective.

18. The method of claim 15, wherein the identification of the first server is a domain name or an internet protocol, IP, address.

19. The method of claim 12 further comprising authenticating the second server.

20. The method of claim 12, wherein sending the delegation message with the signature to the second server in the service system via the delegation session further comprises:
sending the delegation message with the signature by sending a message comprising the delegation message and the signature to the second server in the service system via the delegation session.

21. A method of handling a server delegation for a client in a service system (10) supporting a device management, DM, protocol, **characterized by**:
obtaining, from a second server, a delegation request message comprising a delegation message and a first signature generated by a first server;
verifying validity of the first signature by using a first shared secret, wherein the first shared secret is known by the first server and the client;
verifying whether a first request time is within a first predefined period; and
updating an access right structure for at least one management object of the client if the first signature and the first request time are valid, for the first server to delegate a control of the at least one management object of the client to the second server;
wherein the first request time and the access right structure for the at least one management object of the client is comprised in the delegation message.

22. The method of claim 21, wherein the first server generates the first signature by using the delegation message, the first shared secret and a first secret-related cryptographic application.

23. The method of claim 21, wherein the delegation message and the first signature is comprised in a delegation request message, and the method further comprises:
receiving the delegation request message with a second signature from the second server;
verifying validity of the second signature by using a second shared secret, wherein the second shared secret is known by the second server and the client;
verifying whether a second request time is within a second predefined period, wherein the second request time is comprised in the delegation request message; and
verifying the delegation message and the first signature and updating the access right structure, if the second signature and the second request time are valid.

24. The method of claim 23, wherein the second server generates the second signature by using the delegation request message, the second shared secret and a second secret-related cryptographic application.

25. The method of claim 21, wherein the first request time and the second request time are used for replay-attack protection.

26. A second server for handling a server delegation for a service system supporting a device management, DM, protocol, wherein the second server is configured to:
receive a delegation message with a first signature from a first server via a delegation session, wherein the first server has a control of a plurality of management objects of a client;
generate a delegation request message comprising the delegation message and the first signature; and
send the delegation request message with a second signature to the client in the service system, to obtain the control of part of the plurality of management objects of the client.

27. A first server for handling a server delegation for a service system supporting a device management, DM, protocol, the first server having a control of a plurality of management objects of a client, wherein the first server is configured to:
generate a delegation message comprising delegation information related to delegating a control of part of the plurality of management objects of the client to a second server; and
send the delegation message with a signature to the second server in the service system via a delegation session, to delegate the control of the part of the plurality of management objects of the client to the second server.

28. A communication device for handling a server delegation for a client in a service system supporting a device management, DM, protocol, wherein the communication device is configured to:
obtain, from a second server, a delegation request message comprising a delegation message and a first signature generated by a first server;
verify validity of the first signature by using a first shared secret, wherein the first shared secret is known by the first server and the client;
verify whether a first request time is within a first predefined period; and
update an access right structure for at least one management object of the client if the first signature and the first request time are valid, for the first server to delegate a control of the at least one management object of the client to the second server;
wherein the first request time and the access right structure for the at least one management object of the client is comprised in the delegation message.

29. A mobile phone comprising the communication device of the claim 28.

## Patentansprüche

1. Ein Verfahren zur Handhabung einer Serverdelegierung für einen Server in einem Bediensystem (10), das ein Protokoll zur Geräteverwaltung, DM, unterstützt, wobei das Verfahren Folgendes beinhaltet:
Empfangen (310) einer Delegierungsnachricht mit einer ersten Signatur von einem ersten Server über eine Delegierungssitzung, wobei der erste Server über eine Kontrolle einer Vielzahl von Verwaltungsobjekten eines Clients verfügt;
Erzeugen (320) einer Delegierungsanforderungsnachricht, die die Delegierungsnachricht und die erste Signatur beinhaltet; und
Senden (330) der Delegierungsanforderungsnachricht mit einer zweiten Signatur an den Client in dem Bediensystem, um die Kontrolle eines Teils der Vielzahl von Verwaltungsobjekten des Clients zu erhalten.

2. Verfahren gemäß Anspruch 1, wobei die Delegierungssitzung von dem ersten Server initiiert wird.

3. Verfahren gemäß Anspruch 1, das ferner das Erzeugen der zweiten Signatur durch das Verwenden der Delegierungsanforderungsnachricht, eines zweiten gemeinsamen Geheimnisses und einer zweiten geheimnisbezogenen kryptographischen Anwendung beinhaltet, wobei das zweite gemeinsame Geheimnis dem Server und dem Client bekannt ist.

4. Verfahren gemäß Anspruch 1, wobei die Delegierungsanforderungsnachricht ferner ein Delegierungskennzeichen und eine zweite Anforderungszeit für einen Schutz gegen Angriff durch Wiedereinspielung beinhaltet und das Delegierungskennzeichen eine Nachricht als die Delegierungsanforderungsnachricht markiert.

5. Verfahren gemäß Anspruch 1, wobei der erste Server die erste Signatur durch das Verwenden der Delegierungsnachricht, eines ersten gemeinsamen Geheimnisses und einer ersten geheimnisbezogenen kryptographischen Anwendung erzeugt, wobei das erste gemeinsame Geheimnis dem ersten Server und dem Client bekannt ist.

6. Verfahren gemäß Anspruch 1, wobei die Delegierungsnachricht eine Zugriffsrechtstruktur für den Teil der Vielzahl von Verwaltungsobjekten des Clients, ein Delegierdatum, eine Identifizierung des ersten Servers und eine erste Anforderungszeit zum Schutz gegen Angriff durch Wiedereinspielung beinhaltet.

7. Verfahren gemäß Anspruch 6, wobei die Zugriffsrechtstruktur für den Teil der Vielzahl von Verwaltungsobjekten des Clients Informationen bezüglich Zugriffsrechten des Teils der Vielzahl von Verwaltungsobjekten des Clients beinhaltet.

8. Verfahren gemäß Anspruch 6, wobei das Delegierdatum eine Zeit ist, zu der die Serverdelegierung wirksam wird.

9. Verfahren gemäß Anspruch 6, wobei die Identifizierung des ersten Servers ein Domänenname oder eine Internetprotokolladresse, IP-Adresse, ist.

10. Verfahren gemäß Anspruch 1, das ferner das Authentifizieren des ersten Servers beinhaltet.

11. Verfahren gemäß Anspruch 1, wobei das Empfangen der Delegierungsnachricht mit der ersten Signatur von dem ersten Server über die Delegierungssitzung ferner Folgendes beinhaltet:
Empfangen der Delegierungsnachricht mit der ersten Signatur durch Empfangen einer Nachricht, die die Delegierungsnachricht und die erste Signatur beinhaltet, von dem ersten Server über die Delegierungssitzung.

12. Ein Verfahren zur Handhabung einer Serverdelegierung für einen ersten Server in einem Bediensystem (10), das ein Protokoll zur Geräteverwaltung, DM, unterstützt, wobei der erste Server über eine Kontrolle einer Vielzahl von Verwaltungsobjekten eines Clients verfügt, wobei das Verfahren Folgendes beinhaltet:
Erzeugen einer Delegierungsnachricht, die Delegierungsinformationen bezüglich des Delegierens einer Kontrolle eines Teils der Vielzahl von Verwaltungsobjekten des Clients an einen zweiten Server beinhaltet, und
Senden der Delegierungsnachricht mit einer Signatur an den zweiten Server in dem Bediensystem über eine Delegierungssitzung, um die Kontrolle des Teils der Vielzahl von Verwaltungsobjekten des Clients an den zweiten Server zu delegieren.

13. Verfahren gemäß Anspruch 12, wobei die Delegierungssitzung von dem ersten Server oder dem zweiten Server initiiert wird.

14. Verfahren gemäß Anspruch 12, das ferner das Erzeugen der Signatur durch das Verwenden der Delegierungsnachricht, eines gemeinsamen Geheimnisses und einer geheimnisbezogenen kryptographischen Anwendung beinhaltet, wobei das gemeinsame Geheimnis dem ersten Server und dem Client bekannt ist.

15. Verfahren gemäß Anspruch 12, wobei die Delegierungsinformationen eine Zugriffsrechtstruktur für den Teil der Vielzahl von Verwaltungsobjekten des Clients, ein Delegierdatum, eine Identifizierung des ersten Servers und eine Anforderungszeit zum Schutz gegen Angriff durch Wiedereinspielung beinhalten.

16. Verfahren gemäß Anspruch 15, wobei die Zugriffsrechtstruktur für den Teil der Vielzahl von Verwaltungsobjekten des Clients Informationen bezüglich Zugriffsrechten des Teils der Vielzahl von Verwaltungsobjekten des Clients beinhaltet.

17. Verfahren gemäß Anspruch 15, wobei das Delegierdatum eine Zeit ist, zu der die Serverdelegierung wirksam wird.

18. Verfahren gemäß Anspruch 15, wobei die Identifizierung des ersten Servers ein Domänenname oder eine Internetprotokolladresse, IP-Adresse, ist.

19. Verfahren gemäß Anspruch 12, das ferner das Authentifizieren des zweiten Servers beinhaltet.

20. Verfahren gemäß Anspruch 12, wobei das Senden der Delegierungsnachricht mit der Signatur über die Delegierungssitzung an den zweiten Server in dem Bediensystem ferner Folgendes beinhaltet:
Senden der Delegierungsnachricht mit der Signatur durch Senden einer Nachricht, die die Delegierungsnachricht und die Signatur beinhaltet, über die Delegierungssitzung an den zweiten Server in dem Bediensystem.

21. Ein Verfahren zur Handhabung einer Serverdelegierung für einen Client in einem Bediensystem (10), das ein Protokoll zur Geräteverwaltung, DM, unterstützt, **gekennzeichnet durch**:
Erhalten, von einem zweiten Server, einer Delegierungsanforderungsnachricht, die eine Delegierungsnachricht und eine von einem ersten Server erzeugte erste Signatur beinhaltet;
Überprüfen der Gültigkeit der ersten Signatur **durch** das Verwenden eines ersten gemeinsamen Geheimnisses, wobei das erste gemeinsame Geheimnis dem ersten Server und dem Client bekannt ist;
Überprüfen, ob eine erste Anforderungszeit innerhalb eines ersten vorgegebenen Zeitraums liegt; und
Aktualisieren einer Zugriffsrechtstruktur für mindestens ein Verwaltungsobjekt des Clients, wenn die erste Signatur und die erste Anforderungszeit gültig sind, damit der erste Server eine Kontrolle des mindestens einen Verwaltungsobjekts des Clients an den zweiten Server delegiert;
wobei die erste Anforderungszeit und die Zugriffsrechtstruktur für das mindestens eine Verwaltungsobjekt des Clients in der Delegierungsnachricht enthalten sind.

22. Verfahren gemäß Anspruch 21, wobei der erste Server die erste Signatur durch das Verwenden der Delegierungsnachricht, des ersten gemeinsamen Geheimnisses und einer ersten geheimnisbezogenen kryptographischen Anwendung erzeugt.

23. Verfahren gemäß Anspruch 21, wobei die Delegierungsnachricht und die erste Signatur in einer Delegierungsanforderungsnachricht enthalten sind und das Verfahren ferner Folgendes beinhaltet:
Empfangen der Delegierungsanforderungsnachricht mit einer zweiten Signatur von dem zweiten Server;
Überprüfen der Gültigkeit der zweiten Signatur durch das Verwenden eines zweiten gemeinsamen Geheimnisses, wobei das zweite gemeinsame Geheimnis dem zweiten Server und dem Client bekannt ist;
Überprüfen, ob eine zweite Anforderungszeit innerhalb eines zweiten vorgegebenen Zeitraums liegt, wobei die zweite Anforderungszeit in der
Delegierungsanforderungsnachricht enthalten ist; und
Überprüfen der Delegierungsnachricht und der ersten Signatur und Aktualisieren der Zugriffsrechtstruktur, wenn die zweite Signatur und die zweite Anforderungszeit gültig sind.

24. Verfahren gemäß Anspruch 23, wobei der zweite Server die zweite Signatur durch das Verwenden der Delegierungsanforderungsnachricht, des zweiten gemeinsamen Geheimnisses und einer zweiten geheimnisbezogenen kryptographischen Anwendung erzeugt.

25. Verfahren gemäß Anspruch 21, wobei die erste Anforderungszeit und die zweite Anforderungszeit zum Schutz gegen Angriff durch Wiedereinspielung verwendet werden.

26. Ein zweiter Server zur Handhabung einer Serverdelegierung für ein Bediensystem, das ein Protokoll zur Geräteverwaltung, DM, unterstützt, wobei der zweite Server konfiguriert ist zum:
Empfangen einer Delegierungsnachricht mit einer ersten Signatur von einem ersten Server über eine Delegierungssitzung, wobei der erste Server über eine Kontrolle einer Vielzahl von Verwaltungsobjekten eines Clients verfügt;
Erzeugen einer Delegierungsanforderungsnachricht, die die Delegierungsnachricht und die erste Signatur beinhaltet; und
Senden der Delegierungsanforderungsnachricht mit einer zweiten Signatur an den Client in dem Bediensystem, um die Kontrolle eines Teils der Vielzahl von Verwaltungsobjekten des Clients zu erhalten.

27. Ein erster Server zur Handhabung einer Serverdelegierung für ein Bediensystem, das ein Protokoll zur Geräteverwaltung, DM, unterstützt, wobei der erste Server über eine Kontrolle einer Vielzahl von Verwaltungsobjekten eines Clients verfügt, wobei der erste Server konfiguriert ist zum:
Erzeugen einer Delegierungsnachricht, die Delegierungsinformationen bezüglich des Delegierens einer Kontrolle eines Teils der Vielzahl von Verwaltungsobjekten des Clients an einen zweiten Server beinhaltet, und
Senden der Delegierungsnachricht mit einer Signatur an den zweiten Server in dem Bediensystem über eine Delegierungssitzung, um die Kontrolle des Teils der Vielzahl von Verwaltungsobjekten des Clients an den zweiten Server zu delegieren.

28. Ein Kommunikationsgerät zur Handhabung einer Serverdelegierung für einen Client in einem Bediensystem, das ein Protokoll zur Geräteverwaltung, DM, unterstützt, wobei das Kommunikationsgerät konfiguriert ist zum:
Erhalten, von einem zweiten Server, einer Delegierungsanforderungsnachricht, die eine Delegierungsnachricht und eine erste Signatur, von einem ersten Server erzeugt, beinhaltet;
Überprüfen der Gültigkeit der ersten Signatur durch das Verwenden eines ersten gemeinsamen Geheimnisses, wobei das erste gemeinsame Geheimnis dem ersten Server und dem Client bekannt ist;
Überprüfen, ob eine erste Anforderungszeit innerhalb eines ersten vorgegebenen Zeitraums liegt; und
Aktualisieren einer Zugriffsrechtstruktur für mindestens ein Verwaltungsobjekt des Clients, wenn die erste Signatur und die erste Anforderungszeit gültig sind, damit der erste Server eine Kontrolle des mindestens einen Verwaltungsobjekts des Clients an den zweiten Server delegiert;
wobei die erste Anforderungszeit und die Zugriffsrechtstruktur für das mindestens eine Verwaltungsobjekt des Clients in der Delegierungsnachricht enthalten sind.

29. Ein Mobiltelefon, das das Kommunikationsgerät gemäß Anspruch 28 beinhaltet.

## Revendications

1. Un procédé pour conduire une délégation de serveur pour un serveur dans un système de services (10) supportant un protocole de gestion de dispositifs, DM, le procédé comprenant le fait de :
recevoir (310) un message de délégation avec une première signature provenant d'un premier serveur via une session de délégation, le premier serveur ayant un contrôle d'une pluralité d'objets de gestion d'un client ;
générer (320) un message de demande de délégation comprenant le message de délégation et la première signature ; et
envoyer (330) le message de demande de délégation avec une deuxième signature au client dans le système de services, afin d'obtenir le contrôle d'une partie de la pluralité d'objets de gestion du client.

2. Le procédé de la revendication 1, dans lequel la session de délégation est lancée par le premier serveur.

3. Le procédé de la revendication 1 comprenant en outre le fait de générer la deuxième signature en utilisant le message de demande de délégation, un deuxième secret partagé et une deuxième application cryptographique liée au secret, le deuxième secret partagé étant connu du serveur et du client.

4. Le procédé de la revendication 1, dans lequel le message de demande de délégation comprend en outre une balise de délégation et un deuxième temps de demande pour une protection contre les attaques par rejeu, et la balise de délégation marque un message comme étant le message de demande de délégation.

5. Le procédé de la revendication 1, dans lequel le premier serveur génère la première signature en utilisant le message de délégation, un premier secret partagé et une première application cryptographique liée au secret, le premier secret partagé étant connu du premier serveur et du client.

6. Le procédé de la revendication 1, dans lequel le message de délégation comprend une structure de droits d'accès pour la partie de la pluralité d'objets de gestion du client, une date de délégation, une identification du premier serveur et un premier temps de demande pour une protection contre les attaques par rejeu.

7. Le procédé de la revendication 6, dans lequel la structure de droits d'accès pour la partie de la pluralité d'objets de gestion du client comprend des informations ayant trait à des droits d'accès de la partie de la pluralité d'objets de gestion du client.

8. Le procédé de la revendication 6, dans lequel la date de délégation est un temps auquel la délégation de serveur devient effective.

9. Le procédé de la revendication 6, dans lequel l'identification du premier serveur est un nom de domaine ou une adresse de protocole Internet, IP.

10. Le procédé de la revendication 1 comprenant en outre le fait d'authentifier le premier serveur.

11. Le procédé de la revendication 1, dans lequel le fait de recevoir le message de délégation avec la première signature provenant du premier serveur via la session de délégation comprend en outre le fait de :
recevoir le message de délégation avec la première signature en recevant un message comprenant le message de délégation et la première signature provenant du premier serveur via la session de délégation.

12. Un procédé pour conduire une délégation de serveur pour un premier serveur dans un système de services (10) supportant un protocole de gestion de dispositifs, DM, le premier serveur ayant un contrôle d'une pluralité d'objets de gestion d'un client, le procédé comprenant le fait de :
générer un message de délégation comprenant des informations de délégation ayant trait à la délégation d'un contrôle d'une partie de la pluralité d'objets de gestion du client à un deuxième serveur ; et
envoyer le message de délégation avec une signature au deuxième serveur dans le système de services via une session de délégation, afin de déléguer le contrôle de la partie de la pluralité d'objets de gestion du client au deuxième serveur.

13. Le procédé de la revendication 12, dans lequel la session de délégation est lancée par le premier serveur ou le deuxième serveur.

14. Le procédé de la revendication 12 comprenant en outre le fait de générer la signature en utilisant le message de délégation, un secret partagé et une application cryptographique liée au secret, le secret partagé étant connu du premier serveur et du client.

15. Le procédé de la revendication 12, dans lequel les informations de délégation comprennent une structure de droits d'accès pour la partie de la pluralité d'objets de gestion du client, une date de délégation, une identification du premier serveur et un temps de demande pour une protection contre les attaques par rejeu.

16. Le procédé de la revendication 15, dans lequel la structure de droits d'accès pour la partie de la pluralité d'objets de gestion du client comprend des informations ayant trait à des droits d'accès de la partie de la pluralité d'objets de gestion du client.

17. Le procédé de la revendication 15, dans lequel la date de délégation est un temps auquel la délégation de serveur devient effective.

18. Le procédé de la revendication 15, dans lequel l'identification du premier serveur est un nom de domaine ou une adresse de protocole Internet, IP.

19. Le procédé de la revendication 12 comprenant en outre le fait d'authentifier le deuxième serveur.

20. Le procédé de la revendication 12, dans lequel le fait d'envoyer le message de délégation avec la signature au deuxième serveur dans le système de services via la session de délégation comprend en outre :
le fait d'envoyer le message de délégation avec la signature en envoyant un message comprenant le message de délégation et la signature au deuxième serveur dans le système de services via la session de délégation.

21. Un procédé pour conduire une délégation de serveur pour un client dans un système de services (10) supportant un protocole de gestion de dispositifs, DM, **caractérisé par** le fait de :
obtenir, d'un deuxième serveur, un message de demande de délégation comprenant un message de délégation et une première signature générés par un premier serveur ;
vérifier la validité de la première signature en utilisant un premier secret partagé, le premier secret partagé étant connu du premier serveur et du client ;
vérifier si un premier temps de demande se trouve dans les limites d'une première période prédéfinie ; et
mettre à jour une structure de droits d'accès pour au moins un objet de gestion du client si la première signature et le premier temps de demande sont valides, pour que le premier serveur délègue un contrôle de l'au moins un objet de gestion du client au deuxième serveur ;
le premier temps de demande et la structure de droits d'accès pour l'au moins un objet de gestion du client étant compris dans le message de délégation.

22. Le procédé de la revendication 21, dans lequel le premier serveur génère la première signature en utilisant le message de délégation, le premier secret partagé et une première application cryptographique liée au secret.

23. Le procédé de la revendication 21, dans lequel le message de délégation et la première signature sont compris dans un message de demande de délégation, et le procédé comprend en outre le fait de :
recevoir le message de demande de délégation avec une deuxième signature provenant du deuxième serveur ;
vérifier la validité de la deuxième signature en utilisant un deuxième secret partagé, le deuxième secret partagé étant connu du deuxième serveur et du client ;
vérifier si un deuxième temps de demande se trouve dans les limites d'une deuxième période prédéfinie, le deuxième temps de demande étant compris dans le message de demande de délégation ; et
vérifier le message de délégation et la première signature et mettre à jour la structure de droits d'accès, si la deuxième signature et le deuxième temps de demande sont valides.

24. Le procédé de la revendication 23, dans lequel le deuxième serveur génère la deuxième signature en utilisant le message de demande de délégation, le deuxième secret partagé et une deuxième application cryptographique liée au secret.

25. Le procédé de la revendication 21, dans lequel le premier temps de demande et le deuxième temps de demande sont utilisés pour une protection contre les attaques par rejeu.

26. Un deuxième serveur pour conduire une délégation de serveur pour un système de services supportant un protocole de gestion de dispositifs, DM, le deuxième serveur étant configuré pour :
recevoir un message de délégation avec une première signature provenant d'un premier serveur via une session de délégation, le premier serveur ayant un contrôle d'une pluralité d'objets de gestion d'un client ;
générer un message de demande de délégation comprenant le message de délégation et la première signature ; et
envoyer le message de demande de délégation avec une deuxième signature au client dans le système de services, afin d'obtenir le contrôle d'une partie de la pluralité d'objets de gestion du client.

27. Un premier serveur pour conduire une délégation de serveur pour un système de services supportant un protocole de gestion de dispositifs, DM, le premier serveur ayant un contrôle d'une pluralité d'objets de gestion d'un client, le premier serveur étant configuré pour :
générer un message de délégation comprenant des informations de délégation ayant trait à la délégation d'un contrôle d'une partie de la pluralité d'objets de gestion du client à un deuxième serveur ; et
envoyer le message de délégation avec une signature au deuxième serveur dans le système de services via une session de délégation, afin de déléguer le contrôle de la partie de la pluralité d'objets de gestion du client au deuxième serveur.

28. Un dispositif de communication pour conduire une délégation de serveur pour un client dans un système de services supportant un protocole de gestion de dispositifs, DM, le dispositif de communication étant configuré pour :
obtenir, d'un deuxième serveur, un message de demande de délégation comprenant un message de délégation et une première signature générés par un premier serveur ;
vérifier la validité de la première signature en utilisant un premier secret partagé, le premier secret partagé étant connu du premier serveur et du client ;
vérifier si un premier temps de demande se trouve dans les limites d'une première période prédéfinie ; et
mettre à jour une structure de droits d'accès pour au moins un objet de gestion du client si la première signature et le premier temps de demande sont valides, pour que le premier serveur délègue un contrôle de l'au moins un objet de gestion du client au deuxième serveur ;
le premier temps de demande et la structure de droits d'accès pour l'au moins un objet de gestion du client étant compris dans le message de délégation.

29. Un téléphone portable comprenant le dispositif de communication de la revendication 28.
